# EUROPÄISCHE PATENTSCHRIFT

(11) **EP 3 724 534 B1**
(45) Veröffentlichungstag und Bekanntmachung des Hinweises auf die Patenterteilung: **07.01.2026**
(21) Anmeldenummer: 18807865.3
(22) Anmeldetag: 13.11.2018
(51) Int. Cl.: F16F 15/14

(54) **FLIEHKRAFTPENDEL UND ANTRIEBSANORDNUNG FÜR EIN KRAFTFAHRZEUG**
CENTRIFUGAL PENDULUM AND DRIVE ARRANGEMENT FOR A MOTOR VEHICLE
PENDULE CENTRIFUGE ET ENSEMBLE D'ENTRAÎNEMENT POUR UN VÉHICULE AUTOMOBILE

(30) Priorität: 12.12.2017 DE 102017129511
(43) Veröffentlichungstag der Anmeldung: 21.10.2020
(73) Patentinhaber: Schaeffler Technologies AG & Co. KG, 91074 Herzogenaurach (DE)
(72) Erfinder: FRANZ, Evgenij, 76437 Rastatt (DE); RUSCH, Alain, 67760 Gambsheim (FR); PINNAU, Philippe, 67770 Stattmatten (FR)
(74) Vertreter: Schaeffler Technologies
(86) Internationale Anmeldenummer: PCT/DE2018/100922
(87) Internationale Veröffentlichungsnummer: WO 2019/114857

(56) Entgegenhaltungen:
- EP-A1- 3 161 343
- WO-A1-2018/141491
- WO-A1-2018/161992
- DE-A1- 102014 211 711
- DE-A1- 102015 212 737

## Beschreibung

Die Erfindung betrifft ein Fliehkraftpendel zur Dämpfung von Torsionsschwingungen gemäß dem Oberbegriff des Anspruchs 1, sowie eine Antriebsanordnung für ein Kraftfahrzeug, welche das erfindungsgemäße Fliehkraftpendel aufweist.

Fliehkraftpendel enthalten wenigstens einen um eine Drehachse verdrehbaren Pendelflansch sowie daran schwingbar aufgehangene Pendelmassen. Diese Pendelmassen führen im Feld der Zentrifugalbeschleunigung Schwingungen auf vorgegebenen Bahnen aus. Derart können sie Drehzahlungleichförmigkeiten, die beispielsweise durch den drehschwingungsbehafteten Betrieb von Brennkraftmaschinen eingetragen werden, ausgleichen, indem sie selbst in Schwingungen versetzt werden. Durch diese Schwingungen wird der Erregerschwingung Energie entzogen oder Energie zugeführt, so dass es zu einer Beruhigung bzw. Minderung der Schwingungsamplitude der Erregerschwingung kommt. Das Fliehkraftpendel wirkt hierbei infolge der bei zunehmenden Drehzahlen zunehmenden Fliehkraft als drehzahladaptiver Drehschwingungstilger, da sowohl die Eigenfrequenz der Fliehkraftpendelschwingung als auch die Erregerfrequenz proportional zur Drehzahl sind.

Aus dem Stand der Technik ist die in der DE102006028552 A1 offenbarte Kupplungseinrichtung mit einer Kupplungsscheibe bekannt, die eine Kupplungsnabe umfasst. Um die Kupplungseinrichtung, insbesondere im Hinblick auf die im eingebauten Zustand der Kupplungseinrichtung im Betrieb auftretende Geräuschentwicklung zu optimieren, ist eine Pendelmassenträgereinrichtung einer Fliehkraftpendeleinrichtung, die mehrere Pendelmassen umfasst, die an der Pendelmassenträgereinrichtung relativ zu dieser bewegbar angebracht sind, mit der Kupplungsscheibe gekoppelt. Die Pendelmassen sind dabei beidseitig eines Flanschelementes an diesem begrenzt bewegbar angebracht.

Bei niedrigen Drehzahlen und den dabei auftretenden hohen Drehmomentschwankungen eines Verbrennungsmotors kann es zum Anschlagen der Pendelmassen an der Begrenzung des Schwingraums kommen. Dabei geht die Funktion eines Fliehkraftpendels verloren, sodass keine Schwingungsisolierung mehr gegeben ist.

In der DE102013211391 sind ein drehzahladaptiver Schwingungstilger und ein Drehschwingungsdämpfer mit dem Schwingungstilger offenbart. Der drehzahladaptive Schwingungstilger ist mit einem um eine Drehachse drehenden Scheibenteil und mehreren an diesem über den Umfang angeordneten entlang eines entlang einer epizykloiden ersten Pendelbahn erzwungenen ersten Schwingwinkels und auf eine vorgegebene erste Pendelordnung abgestimmten schwingenden Tilgermassen ausgestattet. Es ist dabei eine Schwerpunktbahn mit zwei Pendelordnungen vorgesehen, wobei die zweite Pendelordnung kleiner ist als die erste Pendelordnung. Da die zweite Ordnung mit der Motoranregung nicht mehr übereinstimmt, nimmt die Schwingungsamplitude der Pendelmassen ab.

Eine weitere Möglichkeit, die Amplituden der Schwingbewegungen der Pendelmassen zu reduzieren, ist die Erzeugung von Reibung zwischen Pendelmassen und einem Träger.

In der DE102010049553 A1 ist offenbart, dass bei einer Fliehkraftpendeleinrichtung, die insbesondere zur Verwendung in einem Antriebsstrang eines Kraftfahrzeuges ausgestaltet ist, mit mehreren Pendelmassen, die an einem Pendelträger angebracht und relativ zu diesem bewegbar sind, die Wirkungsweise der Fliehkraftpendeleinrichtung auf einen Drehzahlbereich oberhalb einer Minimaldrehzahl beschränkt wird. Dies wird durch ein Mittel erreicht, das mindestens eine Pendelmasse drehzahlabhängig in ihrer Bewegung bremst. Die Wirkrichtung dieses Mittels ist hier radial auf die Pendelmasse.

In der DE102014211711 A1 bzw. der WO2015192846 A1 ist ein Fliehkraftpendel mit einem um eine Drehachse verdrehbaren Pendelflansch und über den Umfang verteilten, in dem Pendelflansch im Fliehkraftfeld des drehenden Pendelflanschs pendelnd eingehängten Pendeln offenbart. Um harte Anschläge der Pendel am Pendelflansch zu verhindern, sind die Pendel axial gegenüber dem Pendelflansch vorgespannt. Derart lassen sich auch die Pendelmassen bei der Schwerkraft unterschreitender Fliehkraft in ihren radialen Positionen halten.

Die DE102015212737 A1 offenbart eine Ausführungsform eines Fliehkraftpendels, bei der an der Pendelmasse ein Anschlagdämpfer mittels eines Halteelementes befestigt ist, und die auf den Oberbegriff des Anspruchs 1 lesbar ist.

Hiervon ausgehend liegt der vorliegenden Erfindung die Aufgabe zugrunde, ein Fliehkraftpendel zur Verfügung zu stellen, welches eine zuverlässige Tilgung von Erregerschwingungen mit einer kostengünstigen Bauweise und einer langen Lebensdauer kombiniert.

Diese Aufgabe wird durch das erfindungsgemäße Fliehkraftpendel nach Anspruch 1 sowie durch die Antriebsanordnung nach Anspruch 6 gelöst. Vorteilhafte Ausgestaltungen des erfindungsgemäßen Fliehkraftpendels sind in den Unteransprüchen 2 bis 5 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe radial, axial und Umfangsrichtung beziehen sich im Rahmen der vorliegenden Erfindung immer auf die Drehachse des Fliehkraftpendels.

Die Erfindung betrifft ein Fliehkraftpendel zur Dämpfung von Torsionsschwingungen, mit wenigstens einem um eine Drehachse rotierbaren Pendelflansch und mehreren am Pendelflansch verschiebbar angeordneten Pendelmassen zur Ausführung jeweils einer im Wesentlichen senkrecht zur Drehachse verlaufenden Schwingungsbewegung. Das Fliehkraftpendel weist je Pendelmasse eine Reibhülse auf, wobei eine jeweilige Reibhülse mit der ihr zugeordneten jeweiligen Pendelmasse formschlüssig fest verbunden ist. Derart lassen sich einfach und zuverlässig Reibkräfte auf die Pendelmasse über die Reibhülse übertragen. Insbesondere können die Pendelmassen pendelbar aufgehangen sein. Die formschlüssige Verbindung sichert die Position der Reibhülse an der Pendelmasse auch bei erhöhten Temperaturen.

Vorzugsweise ist eine jeweilige Reibhülse zumindest abschnittsweise an der radialen Innenseite der Pendelmasse angeordnet. Insbesondere kann sich ein Bereich der Reibhülse vollständig an der radialen Innenseite der Pendelmasse erstrecken und sich demzufolge in radialer Richtung an der Pendelmasse entgegenwirkender Fliehkräfte abstützen.

Eine jeweilige Reibhülse weist dabei wenigstens einen sich axial erstreckenden Vorsprung auf, der sich in einen axial verlaufenden Hohlraum der Pendelmasse erstreckt. Derart kann sich die Reibhülse in radialer Richtung an der Pendelmasse festhalten. Gegebenenfalls kann in radialer Richtung eine Vorspannung zwischen dem axialen Vorsprung, der auch als Schnapphaken bezeichnet wird, und der Seite der Reibhülse bestehen, mit der diese an der Pendelmasse anliegt, um dadurch erzeugte Normalkräfte in radialer Richtung zur Erzeugung von Reibkräften auszunutzen, die einem unbeabsichtigten Herausbewegen des sich axial erstreckenden Vorsprungs aus dem Hohlraum vorbeugt.

Alternativ oder zusätzlich kann die Reibhülse wenigstens einen sich in Umfangsrichtung erstreckenden Vorsprung aufweisen, der sich in einen in Umfangsrichtung verlaufenden Hohlraum der Pendelmasse erstreckt. Das bedeutet, dass die Reibhülse auch einen in tangentialer Richtung sich erstreckenden Schnapphaken aufweisen kann, der in einen entsprechenden, in tangentialer Richtung bzw. in Umfangsrichtung ausgebildeten Hohlraum in der Pendelmasse eingreifen kann. Gegebenenfalls kann auch hier in radialer Richtung eine Vorspannung zwischen dem in Umfangsrichtung sich erstreckenden Vorsprung und der Seite der Reibhülse bestehen, mit der diese an der Pendelmasse anliegt, um dadurch erzeugte Normalkräfte in radialer Richtung zur Erzeugung von Reibkräften auszunutzen, die einem unbeabsichtigten Herausbewegen des sich in Umfangsrichtung erstreckenden Vorsprungs aus dem Hohlraum vorbeugt. Das bedeutet, dass die Reibhülse die Pendelmasse in Umfangsrichtung an wenigstens einer Seite und vorzugsweise an beiden Seiten umgreift.

Insbesondere kann dabei vorgesehen sein, dass das den in Umfangsrichtung verlaufenden Hohlraum ausbildende Material der Pendelmasse in radialer Richtung einen Rücksprung ausbildet und der sich in Umfangsrichtung erstreckende Vorsprung der Reibhülse einen Hinterschnitt im Bereich des Rücksprunges ausbildet. Derart ist formschlüssig eine Fixierung des sich in Umfangsrichtung erstreckenden Vorsprungs in bzw. an der Pendelmasse gewährleistet und somit die Sicherheit gegen ein unbeabsichtigtes Ablösen der Reibhülse von der Pendelmasse erhöht.

In einfacher und kostengünstiger Ausführungsform ist die Reibhülse durch eine die jeweilige Pendelmasse bereichsweise umhüllende Kunststoff-Umhüllung ausgebildet. Das heißt, dass hier z.B. ein Metallkern der Pendelmasse bereichsweise an dessen Außenseite mit Kunststoff ummantelt ist. Dabei kann diese Umhüllung an den gegenüberliegenden Seiten der Pendelmasse unterschiedliche Wanddicken aufweisen.

Das Fliehkraftpendel weist wenigstens eine Reibeinrichtung auf, mit der jeweils eine im Wesentlichen parallel zur Drehachse wirkende Normalkraft auf eine jeweilige Reibhülse realisiert ist, so dass bei einer Bewegung der Pendelmasse auf Grund der Belastung mit der ersten Normalkraft eine der Bewegung entgegen wirkende Reibkraft an der Reibhülse der jeweiligen Pendelmasse erzeugt ist.

Vorzugsweise ist dabei die Reibeinrichtung eine ringförmige Blattfeder, mit der die Normalkraft auf eine jeweilige Reibhülse bewirkt ist.

Mit der ringförmigen Reibeinrichtung kann somit im Wesentlichen parallel zur Drehachse jeweils eine Kraft auf alle angeordneten Pendelmassen bzw. auf die den Pendelmassen zugeordneten Reibhülsen aufgebracht werden, so dass bei Bewegung einer Pendelmasse eine Reibkraft auf die Pendelmasse bzw. auf die dieser Pendelmasse zugeordnete Reibhülse entgegen der Bewegung der Pendelmasse wirkt. Dabei kann die Reibeinrichtung im Detail Abweichungen von einer Kreisringform aufweisen.

Die Reibeinrichtung ist eine ringförmige Blattfeder, mit der die Normalkraft auf eine jeweilige Reibhülse bewirkt ist. Eine derartige ringförmige Biegefeder bzw. Blattfeder ist vorzugsweise aus einem Federstahl hergestellt.

Die Biegefeder kann sich am Pendelflansch abstützen und mehrere sich in axialer Richtung erstreckende konvexe Bereiche aufweisen, wobei wenigstens ein konvexer Bereich an dem Reibhülse einer jeweiligen Pendelmasse anliegt und gegen dieses drückt. Derart werden über die konvexen Bereiche die achsparallel wirkenden Normalkräfte auf die Pendelmassen aufgebracht, die zu den schwingungsdämpfenden Reibkräften führen. Zwischen den konvexen Bereichen befindliche Abschnitte der Biegefeder stützen sich dabei axial am Pendelflansch ab. Das heißt, dass die Reibeinrichtung einerseits auf die Reibhülse einer jeweiligen Pendelmasse wirkt und sich andererseits an einem Pendelflansch abstützt. Der Pendelflansch bringt somit die entsprechende Gegenkraft zur Normalkraft auf.

So kann zum Beispiel die Biegefeder am Umfang als konvexe Bereiche drei gleichmäßig verteilte, axial herausstehende Wellungen aufweisen, die auf entsprechend positionierte Pendelmassen bzw. Reibhülsen drücken.

Ein jeweiliger konvexer Bereich bzw. eine jeweilige Wellung kann dabei an der radialen Außenseite der Ringform einen größeren Abstand zur Anordnungsebene der ringförmigen Biegefeder aufweisen als an der radialen Innenseite. Die Anordnungsebene ist dabei die im Wesentlichen senkrecht zur Drehachse stehende Ebene, die der Ebene der Anordnung der ringförmigen Biegefeder unabhängig von den konvexen Bereichen entspricht.

In weiterer Ausgestaltung der ringförmigen Biegefeder ist vorgesehen, dass diese axial herausragende Elemente aufweist, die in dem Pendelflansch eingehängt sind, an dem sich die Biegefeder axial abstützt. Diese herausragenden Elemente sichern eine bestimmte Winkelposition der ringförmigen Biegefeder in Bezug zu dem Pendelflansch auch bei Wirkung der Gegenkraft der von der Biegefeder aufgebrachten Reibkraft auf die Biegefeder tangential zur Drehbewegung der Pendelflansche.

Die von der Reibeinrichtung aufgebrachte Normalkraft wirkt im Wesentlichen parallel zur Drehachse und somit senkrecht zur Bewegungsrichtung der Pendelmasse bzw. senkrecht zu einer Tangente einer rotatorischen Bewegung der Pendelmasse.

Durch die Reibkraft wird die Bewegung der Reibhülse und aufgrund der mechanischen Verbindung der Reibhülse mit der Pendelmasse auch die Schwingungsbewegung der Pendelmasse selbst gebremst und demzufolge eine Schwingamplitude der Pendelmasse gedämpft.

Eine translatorische Relativ-Bewegung findet somit zwischen der sich bewegenden Reibhülse bzw. der damit verbundenen Pendelmasse einerseits und andererseits einem rotatorisch feststehenden Element statt, wie zum Beispiel der Reibeinrichtung selbst oder dem Pendelflansch.

Aufgrund dessen, dass sich bei der Bewegung der Pendelmasse deren Abstand zur Reibeinrichtung nicht ändert, wird die Pendelmasse bzw. die Reibhülse mit einer im Wesentlichen konstanten Normalkraft beaufschlagt, sodass auch eine im Wesentlichen konstante Reibkraft entsteht.

Das erfindungsgemäße Fliehkraftpendel kann zwei Pendelflansche aufweisen, so dass das Fliehkraftpendel neben dem erstgenannten Pendelflansch einen weiteren, zweiten Pendelflansch aufweist, wobei die beiden Pendelflansche entlang der Drehachse einander gegenüberliegend angeordnet sind und die Pendelmassen zwischen den Pendelflanschen angeordnet sind. Die beiden Pendelflansche sind dazu eingerichtet, gemeinsam um die Drehachse zu rotieren und die eingetragenen Schwingungen aufzunehmen und auf die Pendelmassen zu übertragen.

Die Reibeinrichtung kann ein oder zwei ringförmige Biegefedern aufweisen. So kann das Fliehkraftpendel als Reibeinrichtung lediglich eine ringförmige erste Biegefeder zwischen dem ersten Pendelflansch und den Reibhülsen der Pendelmassen aufweisen. Durch die von der einzelnen Biegefeder erzeugten Normalkräfte beaufschlagt, liegen die Pendelmassen am weiteren, zweiten Pendelflansch an.

In alternativer Ausgestaltung weist das Fliehkraftpendel als Reibeinrichtung zwei ringförmige Biegefedern auf, wobei eine ringförmige erste Biegefeder zwischen dem ersten Pendelflansch und den Reibhülsen der Pendelmassen angeordnet ist, und eine ringförmige zweite Biegefeder zwischen dem weiteren, zweiten Pendelflansch und den Reibhülsen der Pendelmassen angeordnet ist.

In der erstgenannten Alternative existieren bei Bewegung der Pendelmassen bzw. deren Reibhülse Reibkräfte zwischen der Reibhülse und der als Biegefeder ausgestalteten Reibeinrichtung einerseits, und andererseits zwischen der Pendelmasse bzw. dessen Reibhülse und dem zweiten Pendelflansch.

In der zweiten genannten Alternative weist das Fliehkraftpendel eine Reibeinrichtung in Form einer ringförmigen Biegefeder, insbesondere einer ringförmigen Blattfeder, auf, mit der im Wesentlichen parallel zur Drehachse jeweils eine Kraft auf die Pendelmassen bzw. die zugeordneten Reibhülsen aufgebracht ist, so dass bei Bewegung einer Pendelmasse eine Reibkraft auf die Pendelmasse bzw. die ihr zugeordnete Reibhülse entgegen der Bewegung der Pendelmasse wirkt. Es existieren somit bei Bewegung der Pendelmassen bzw. deren Reibhülsen Reibkräfte zwischen der Reibhülse und der ersten Biegefeder einerseits, und andererseits zwischen den Pendelmassen bzw. deren Reibhülse und der zweiten ringförmigen Biegefeder, die sich axial am zweiten Pendelflansch abstützt.

In beiden Fällen wird das Gleichgewicht zu den von der Reibeinrichtung bzw. den Biegefedern aufgebrachten Normalkräften mittels einem oder mehreren Pendelflanschen erzeugt.

Das heißt, dass die Pendelmassen, die axial mit den Kräften von der Reibeinrichtung belastet werden, sich andererseits direkt oder indirekt an dem weiteren Pendelflansch abstützen, um in axialer Richtung ein statisches Gleichgewicht zu erzeugen.

In einer weiteren Ausführungsform ist vorgesehen, dass die Reibeinrichtung mehrere Schrauben-Druckfedern umfasst, die in Öffnungen bzw. Aussparungen in den Pendelmassen aufgenommen sind und die axial jeweils eine Normalkraft auf die der jeweiligen Pendelmasse zugeordnete Reibhülse ausüben, so dass dieses axial gegen zumindest einen Pendelflansch gedrückt ist. Eine jeweilige Schrauben-Druckfeder ist somit formschlüssig in der Pendelmasse aufgenommen. Die Schrauben-Druckfeder drückt mit einer jeweiligen Normkraft axial gegen die Reibhülse der jeweiligen Pendelmasse, das wiederum gegen einen Pendelflansch drückt. Durch eine Relativbewegung zwischen der Reibhülse und dem Pendelflansch entsteht zwischen diesen Bauteilen bei Bewegung der Pendelmasse eine Reibkraft, die dieser Bewegung entgegen gerichtet ist, so dass eine Schwingbewegung der Pendelmasse gedämpft wird.

In der Ausgestaltung des Fliehkraftpendels, in der zwei einander gegenüberliegend positionierte Pendelflansche vorhanden sind, stützen sich die Schrauben-Druckfedern axial an ebenfalls axial gegenüberliegenden Bereichen der Reibhülse oder an gegenüberliegenden Reibhülsen ab, die sich wiederum axial an den Pendelflanschen abstützen.

Ergänzend wird eine Antriebsanordnung für ein Kraftfahrzeug zur Verfügung gestellt, die eine Antriebsmaschine, insbesondere eine Verbrennungskraftmaschine, sowie ein Fahrzeuggetriebe und ein erfindungsgemäßes Fliehkraftpendel aufweist, wobei das Fliehkraftpendel die Antriebsmaschine und das Fahrzeuggetriebe rotatorisch mechanisch miteinander verbindet.

Das Fliehkraftpendel kann dabei insbesondere an der Nabe, bzw. am Flansch einer Kupplungsscheibe oder direkt an einer Getriebeeingangswelle montiert sein.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Figur 1: ein erfindungsgemäßes Fliehkraftpendel mit Kupplungsscheibe in Draufsicht,
Figur 2: das Fliehkraftpendel mit Kupplungsscheibe in Ansicht von der Seite,
Figur 3: das Fliehkraftpendel in Explosionsdarstellung,
Figur 4: das Fliehkraftpendel in Draufsicht,
Figur 5: das Fliehkraftpendel in einem Teilschnitt A-A,
Figur 6: eine Pendelmasse mit Reibhülse in perspektivischer Darstellung,
Figur 7: eine Pendelmasse mit Reibhülse einer ersten Ausführungsform in teilweise geschnittener Darstellung,
Figur 8: die Pendelmasse mit Reibhülse der ersten Ausführungsform im Teilschnitt B-B,
Figur 9: Einzelheit Y aus Figur 8,
Figur 10: Einzelheit Z aus Figur 7,
Figur 11: die in Figur 7 dargestellte Pendelmasse mit Reibhülse in Ansicht von der Seite,
Figur 12: eine Pendelmasse mit Reibhülse einer zweiten Ausführungsform in teilweise geschnittener Darstellung,
Figur 13: die Pendelmasse mit Reibhülse der zweiten Ausführungsform im Teilschnitt B-B,
Figur 14: Einzelheit Z aus Figur 12,
Figur 15: Einzelheit Y aus Figur 13,
Figur 16: die in Figur 12 dargestellte Pendelmasse mit Reibhülse in Ansicht von der Seite,
Figur 17: eine Pendelmasse mit Reibhülse einer dritten Ausführungsform in teilweise geschnittener Darstellung,
Figur 18: Schnittdarstellung entlang des Schnitt Verlaufes C-C,
Figur 19: die Pendelmasse mit Reibhülse der dritten Ausführungsform im Teilschnitt B-B,
Figur 20: Einzelheit X aus Figur 17,
Figur 21: Einzelheit Y aus Figur 19,
Figur 22: Einzelheit Z aus Figur 18, und
Figur 23: die in Figur 17 dargestellte Pendelmasse mit Reibhülse in Ansicht von der Seite.

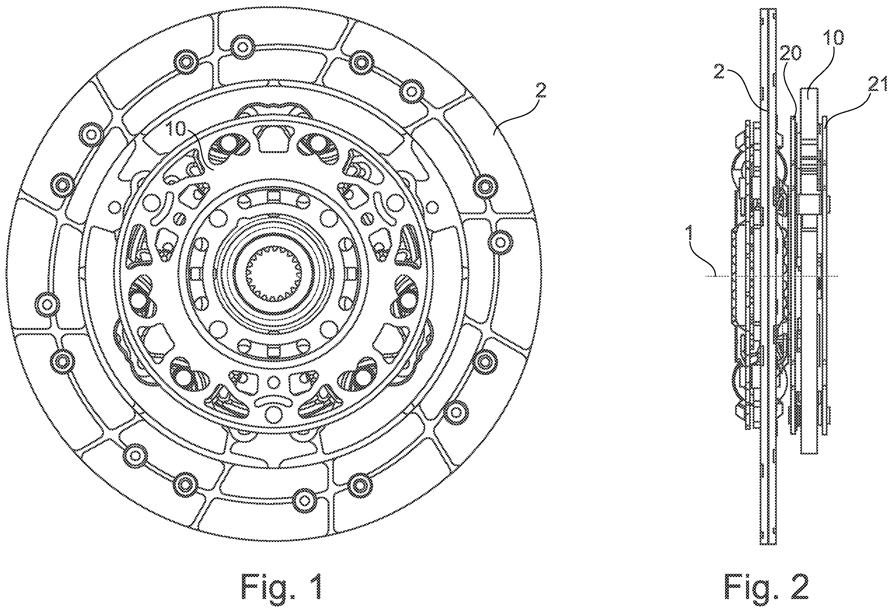

In Figur 1 ist zur Darstellung der Position des erfindungsgemäßen Fliehkraftpendels dieses in koaxiale Anordnung hinter Kupplungsscheiben 2 dargestellt.

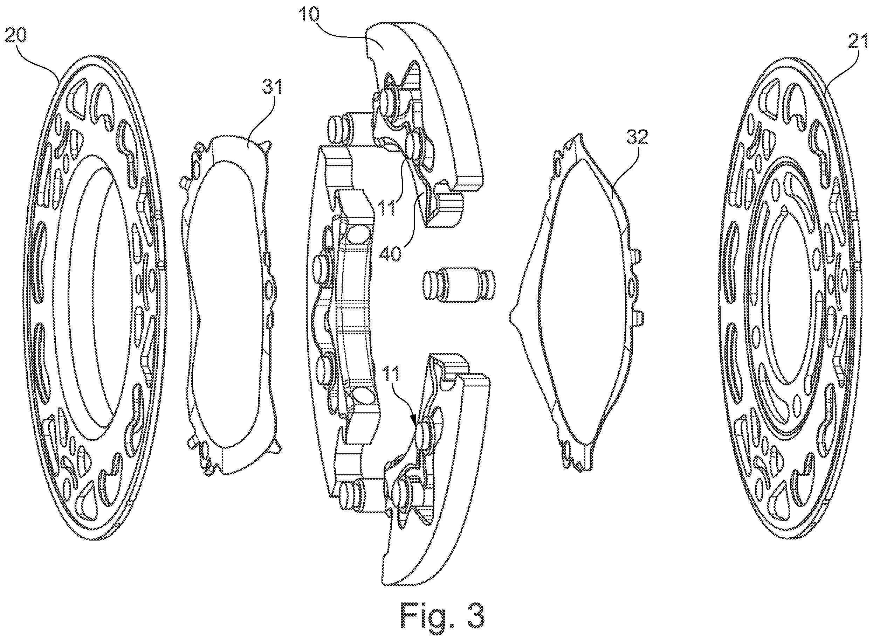

Figur 3 zeigt dieses Modul aus Kupplungsscheiben 2 und Fliehkraftpendel in Ansicht von der Seite, wobei ersichtlich ist, dass die Kupplungsscheiben 2 und das Fliehkraftpendel 3 auf einer gemeinsamen Drehachse 1 angeordnet sind. Ersichtlich ist weiterhin, dass axial neben der angeordneten Pendelmasse 10 beidseitig ein erster Pendelflansch 20 und ein zweiter Pendelflansch 21 vorhanden sind, an denen die Pendelmassen 10 pendelbar aufgehangen sind. Figur 3 zeigt ein Fliehkraftpendel in Explosionsdarstellung, wobei hier wieder außen die beiden Pendelflansche 20,21 ersichtlich sind. An deren den Pendelmassen 10 zugewandten Seiten befinden sich eine erste ringförmige Biegefeder 31 und eine zweite ringförmige Biegefeder 32. Im Zentrum sind drei Pendelmassen 10 dargestellt, an deren radialen Innenseiten 11 jeweils eine Reibhülse 40 angeordnet ist.

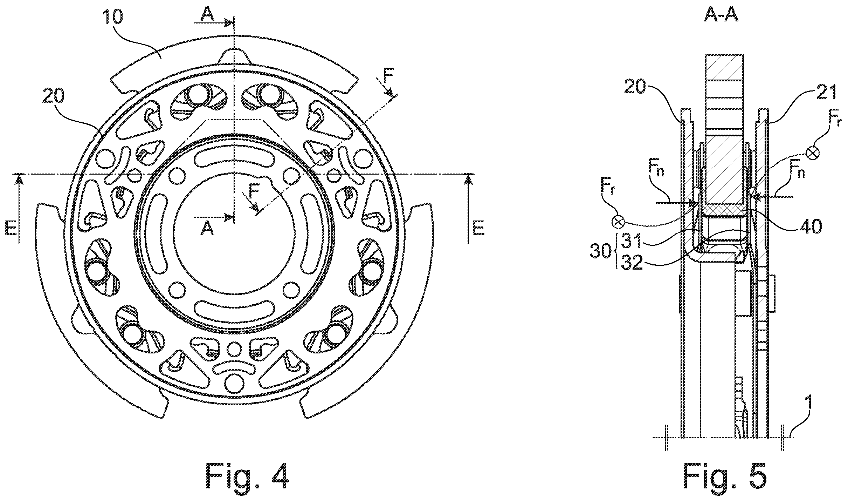

Figur 4 zeigt ein erfindungsgemäßes Fliehkraftpendel in Draufsicht, wobei ersichtlich ist, dass die Pendelmassen 10 radial zwischen den Pendelflanschen 20,21 herausstehen können.

Aus Figur 5 sind noch einmal der Aufbau und die Funktion ersichtlich. Es ist erkennbar, dass sich die beiden Biegefeder 31,32 axial außen an den Pendelflanschen 20,21 abstützen und dadurch Normalkräfte Fn axial auf die Reibhülse 40 wirken, sodass zwischen Biegefeder 31,32 und Reibhülse 40 bei einer Relativbewegung die angedeuteten Reibkräfte Fr einer übermäßigen Schwingung entgegenwirken. Die beiden Biegefedern 30,32 bilden dabei zusammen eine Reibeinrichtung 30 aus.

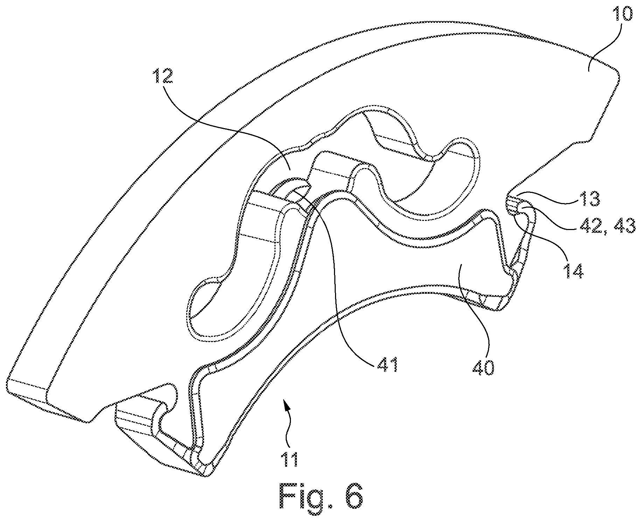

Figur 6 zeigt eine Pendelmasse 10 mit daran formschlüssig angeordneter Reibhülse 40. Es ist ersichtlich, dass die Pendelmasse 10 im zentralen Bereich einen axial verlaufenden Hohlraum 12 aufweist, der zur Montage einer Rolle zur Aufhängung der Pendelmasse dient und in welchen beidseitig axial sich erstreckende Vorsprünge 41 der Reibhülse 40 eingreifen. Bereits dadurch ist der Reibhülse 40 der translatorische Freiheitsgrad in radialer Richtung bezüglich der Pendelmasse 10 genommen. Zudem ist ersichtlich, dass die Pendelmasse 10 an ihren umfangsseitigen Begrenzungen jeweils einen in Umfangsrichtung verlaufenden Hohlraum 13 aufweist, in welche sich in Umfangsrichtung erstreckende Vorsprünge 42 der Reibhülse 40 erstrecken. Demzufolge ist der Reibhülse 40 auch der rotatorische Freiheitsgrad um die Drehachse bezüglich der Pendelmasse 10 genommen.

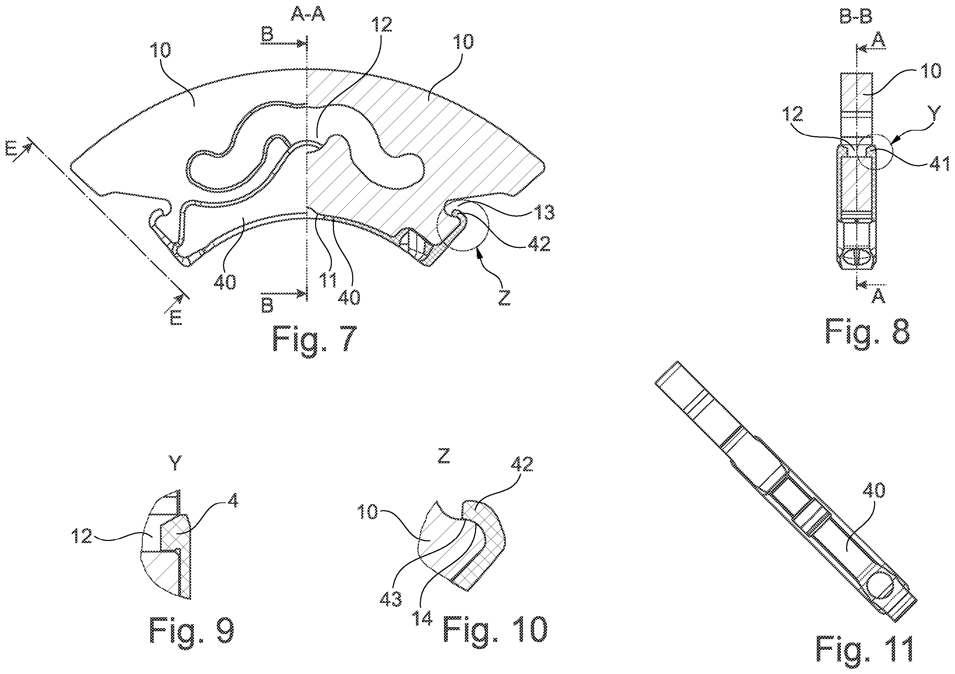

In Figur 7 ist diese Ausführungsform noch einmal in einem Teilschnitt dargestellt. Es ist ersichtlich, dass die Reibhülse 40 an der radial inneren Seite 11 der Pendelmasse 10 anliegt. Weiterhin sind die bereits bezüglich Figur 6 beschriebenen Details ebenfalls in den Figuren 7-10 erkennbar.

In der Einzelheit Z, die in Figur 10 dargestellt ist, ist zudem erkennbar, dass der in Umfangsrichtung sich erstreckende Vorsprung 42 der Reibhülse 40 einen Hinterschnitt 43 im Bereich eines Rücksprungs 14 der Pendelmasse 10 ausbildet, um somit formschlüssig die Fixierung in Umfangsrichtung zu gewährleisten.

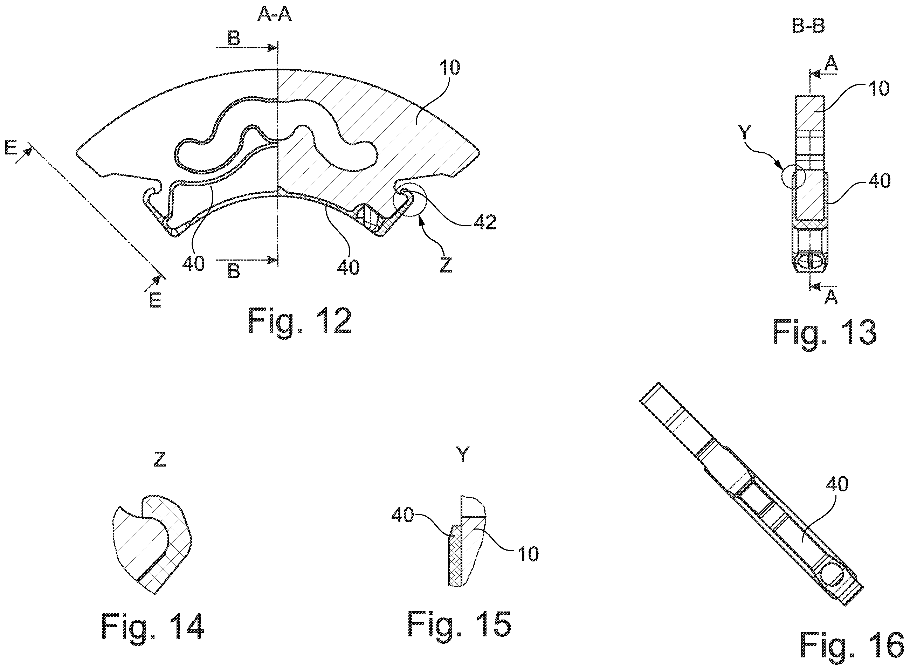

Die Figuren 12-16 zeigen eine zweite Ausführungsform der Pendelmasse 10 mit Reibhülse 40, bei der im Unterschied zu der bisher dargestellten Ausführungsvariante die Reibhülse 40 keinen sich axial erstreckenden Vorsprung 41 aufweist, sondern beidseitig der Pendelmasse 10 lediglich an dieser anliegt. Diese Ausführungsform ist mit geringeren Herstellungs- und Montagekosten realisierbar.

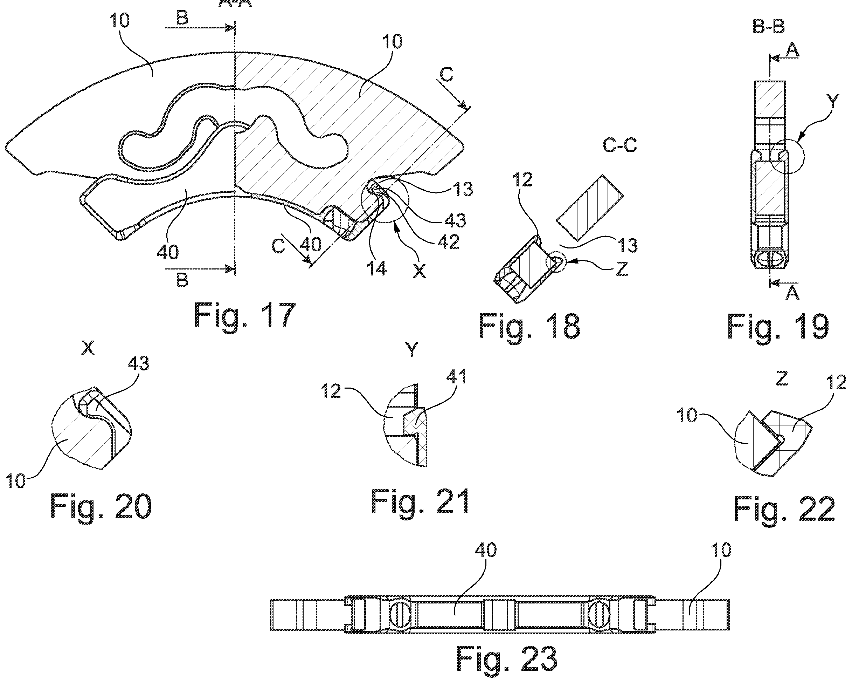

Den Figuren 17 bis 23 ist eine dritte Ausführungsform der Pendelmasse 10 mit Reibhülse 40 entnehmbar, die im zentralen Bereich der in den Figuren 7-11 besprochenen Variante gleicht, umfangsseitig jedoch den Unterschied aufweist, dass hier der sich in Umfangsrichtung erstreckende Vorsprung 42 der Reibhülse 40 sich nicht nur in Umfangsrichtung erstreckt, sondern auch axial beidseitig der Pendelmasse 10 jeweils axial sich erstreckende Vorsprünge 41 umfasst, die in axialer Richtung in den in Umfangsrichtung verlaufenden Hohlraum 13 der Pendelmasse 10 eingreifen, der auch in axialer Richtung ausgebildet ist, wie es insbesondere aus Figur 18 ersichtlich ist.

Mit dem hier vorgeschlagenen erfindungsgemäßen Fliehkraftpendel mit langer Lebensdauer können in effizienter Weise Torsionsschwingungen insbesondere in verbrennungsmotorgetriebenen Kraftfahrzeugantriebssträngen reduziert bzw. eliminiert werden.

### Bezugszeichenliste

- 1: Drehachse
- 2: Kupplungsscheibe
- 3: Fliehkraftpendel
- 10: Pendelmasse
- 11: radial innere Seite
- 12: axial verlaufender Hohlraum
- 13: in Umfangsrichtung verlaufender Hohlraum
- 14: Rücksprung
- 20: erster Pendelflansch
- 21: zweiter Pendelflansch
- 30: Reibeinrichtung
- 31: erste Biegefeder
- 32: zweite Biegefeder
- 40: Reibhülse
- 41: axial erstreckender Vorsprung
- 42: in Umfangsrichtung erstreckender Vorsprung
- 43: Hinterschnitt
- Fn: Normalkraft
- Fr: Reibkraft

## Patentansprüche

1. Fliehkraftpendel zur Dämpfung von Torsionsschwingungen, mit wenigstens einem um eine Drehachse (1) rotierbaren Pendelflansch (20) und mehreren am Pendelflansch (20) verschiebbar angeordneten Pendelmassen (10) zur Ausführung jeweils einer im Wesentlichen senkrecht zur Drehachse verlaufenden Schwingungsbewegung (2), wobei das Fliehkraftpendel je Pendelmasse (10) eine Hülse aufweist, wobei eine jeweilige Hülse mit der ihr zugeordneten jeweiligen Pendelmasse (10) formschlüssig fest verbunden ist, **dadurch gekennzeichnet, dass** die jeweilige Hülse als Reibhülse (40) ausgebildet ist, und das Fliehkraftpendel wenigstens eine als ringförmige Blattfeder ausgebildete Reibeinrichtung (30) aufweist, mit der jeweils eine im Wesentlichen parallel zur Drehachse wirkende Normalkraft (Fn) auf die jeweilige Reibhülse (40) realisiert ist, so dass bei einer Bewegung der Pendelmasse (10) auf Grund der Belastung mit der Normalkraft (Fn) eine der Bewegung entgegen wirkende Reibkraft (Fr) an der Reibhülse (40) der jeweiligen Pendelmasse (10) erzeugt ist, wobei die Reibhülse (40) wenigstens einen sich axial erstreckenden Vorsprung (41) aufweist, der sich in einen axial verlaufenden Hohlraum (12) der Pendelmasse (10) erstreckt..

2. Fliehkraftpendel nach Anspruch 1, **dadurch gekennzeichnet, dass** die Reibhülse zumindest abschnittsweise an der radialen Innenseite (11) der Pendelmasse (10) angeordnet ist.

3. Fliehkraftpendel nach einem der vorhergehenden Ansprüche, **dadurch gekennzeichnet, dass** die Reibhülse (40) wenigstens einen sich in Umfangsrichtung erstreckenden Vorsprung (42) aufweist, der sich in einen in Umfangsrichtung verlaufenden Hohlraum (13) der Pendelmasse (10) erstreckt.

4. Fliehkraftpendel nach Anspruch 3, **dadurch gekennzeichnet, dass** das den in Umfangsrichtung verlaufenden Hohlraum (13) ausbildende Material der Pendelmasse (10) in radialer Richtung einen Rücksprung (14) ausbildet und der sich in Umfangsrichtung erstreckenden Vorsprung (42) der Reibhülse (40) einen Hinterschnitt (43) im Bereich des Rücksprunges (14) ausbildet.

5. Fliehkraftpendel nach einem der vorhergehenden Ansprüche, **dadurch gekennzeichnet, dass** die Reibhülse (40) durch eine die jeweilige Pendelmasse (10) bereichsweise umhüllende Kunststoff-Umhüllung ausgebildet ist.

6. Antriebsanordnung für ein Kraftfahrzeug, mit einer Antriebsmaschine, insbesondere einer Verbrennungskraftmaschine, sowie mit einem Fahrzeuggetriebe und einem Fliehkraftpendel nach einem der Ansprüche 1 bis 6, wobei das Fliehkraftpendel die Antriebsmaschine und das Fahrzeuggetriebe rotatorisch mechanisch miteinander verbindet.

## Claims

1. A centrifugal pendulum for damping torsional oscillations, having at least one pendulum flange (20) that is rotatable about an axis of rotation (1) and multiple pendulum masses (10) that are arranged in a displaceable manner on the pendulum flange (20) for performing, in each case, an oscillatory movement (2) extending substantially perpendicular to the axis of rotation, wherein the centrifugal pendulum has a sleeve for each pendulum mass (10), wherein a respective sleeve is firmly connected in a form-fitting manner to the respective pendulum mass (10) assigned to it, **characterized in that** the respective sleeve is designed as a friction sleeve (40), and the centrifugal pendulum has at least one friction device (30) designed as an annular leaf spring, with which a normal force (Fn) acting substantially parallel to the axis of rotation is realized on the respective friction sleeve (40) such that during a movement of the pendulum mass (10) due to the application of the normal force (Fn) a frictional force (Fr) acting against the movement is generated on the friction sleeve (40) of the respective pendulum mass (10), wherein the friction sleeve (40) has at least one axially extending projection (41) that extends into an axially extending cavity (12) of the pendulum mass (10).

2. The centrifugal pendulum according to claim 1, **characterized in that** the friction sleeve is arranged at least in sections on the radially inner side (11) of the pendulum mass (10).

3. The centrifugal pendulum according to any one of the preceding claims, **characterized in that** the friction sleeve (40) has at least one projection (42) extending in the circumferential direction that extends into a cavity (13) of the pendulum mass (10) extending in the circumferential direction.

4. The centrifugal pendulum according to claim 3, **characterized in that** the material of the pendulum mass (10) forming the cavity (13) extending in the circumferential direction forms a recess (14) in the radial direction and the projection (42) of the friction sleeve (40) extending in the circumferential direction forms an undercut (43) in the region of the recess (14).

5. The centrifugal pendulum according to any one of the preceding claims, **characterized in that** the friction sleeve (40) is formed by a plastic sheathing enveloping the respective pendulum mass (10) in regions.

6. A drive arrangement for a motor vehicle, having a drive motor, in particular an internal combustion engine, and having a vehicle transmission and a centrifugal pendulum according to any one of claims 1 to 6, wherein the centrifugal pendulum mechanically connects the drive motor and the vehicle transmission to one another in a rotating manner.

## Revendications

1. Pendule centrifuge destiné à amortir les vibrations de torsion, comprenant au moins une bride de pendule (20) pouvant tourner autour d'un axe de rotation (1) et plusieurs masses pendulaires (10) agencées de manière coulissante sur la bride de pendule (20) pour effectuer chacune un mouvement oscillatoire (2) sensiblement perpendiculaire à l'axe de rotation, le pendule centrifuge présentant un manchon par masse pendulaire (10), chaque manchon étant relié solidement par complémentarité de forme à la masse pendulaire (10) qui lui est associée, **caractérisé en ce que** le manchon respectif est conçu comme un manchon de friction (40) et le pendule centrifuge comporte au moins un dispositif de friction (30) conçu comme un ressort à lame annulaire, avec lequel un effort normal (Fn) agissant sensiblement parallèlement à l'axe de rotation est exercé sur le manchon de friction (40) correspondant, de façon que, lors d'un mouvement de la masse pendulaire (10), une force de friction (Fr) à l'encontre du mouvement est générée sur le manchon de friction (40) de la masse pendulaire (10) correspondante en raison de la sollicitation par l'effort normal (Fn), le manchon de friction (40) présentant au moins une protubérance (41) s'étendant axialement, qui s'étend dans une cavité (12) s'étendant axialement de la masse pendulaire (10).

2. Pendule centrifuge selon la revendication 1, **caractérisé en ce que** le manchon de friction est agencé au moins par endroits sur la face interne radiale (11) du pendule centrifuge (10).

3. Pendule centrifuge selon l'une quelconque des revendications précédentes, **caractérisé en ce que** le manchon de friction (40) présente au moins une protubérance (42) s'étendant dans le sens circonférentiel, qui s'étend dans une cavité (13) de la masse pendulaire (10) s'étendant dans le sens circonférentiel.

4. Pendule centrifuge selon la revendication 3, **caractérisé en ce que** le matériau formant la cavité (13) s'étendant dans le sens circonférentiel de la masse pendulaire (10) forme un évidement (14) dans la direction radiale et **en ce que** la protubérance (42) du manchon de friction (40) s'étendant dans la direction circonférentielle forme une contre-dépouille (43) dans la zone de l'évidement (14).

5. Pendule centrifuge selon l'une quelconque des revendications précédentes, **caractérisé en ce que** le manchon de friction (40) est formé par une gaine en plastique enveloppant par endroits la masse pendulaire (10) respective.

6. Ensemble d'entraînement pour un véhicule automobile, comprenant un moteur d'entraînement, en particulier un moteur à combustion interne, ainsi qu'une boîte de vitesses et un pendule centrifuge selon l'une des revendications 1 à 6, le pendule centrifuge reliant mécaniquement entre eux, de façon rotative, le moteur d'entraînement et la boîte de vitesses.
